# EUROPEAN PATENT APPLICATION

(11) **EP 4 417 450 A1**
(43) Date of publication of application: **21.08.2024**
(21) Application number: 24156698.3
(22) Date of filing: 08.02.2024
(51) Int. Cl.: B60K 1/00, B60K 11/02

(54) **COOLING SYSTEM AND ELECTRIC CONSTRUCTION MACHINE WITH THE SAME**

(30) Priority: 16.02.2023 CN 202320236770 U
(71) Applicant: Caterpillar, Inc., Peoria, IL 61629-6450 (US)
(72) Inventor: LIU, Dunli, Qingdao, 266061 (CN); LIU, Zhenbin, Qingdao, 266061 (CN); YUAN, Jiangjiang, Qingdao, 266061 (CN); CHEN, Zhe, Qingdao, 266061 (CN); SUN, Yining, Wuxi, 214028 (CN)
(74) Representative: Boult Wade Tennant LLP

(57) **Abstract**

The present utility model relates to a cooling system for an electrical module of an electric construction machine, comprising a cooling loop in which a cooling liquid circulates. The cooling loop comprises a heat exchange unit associated with the electrical module to be temperature controlled, a heat dissipation device arranged downstream of the heat exchange unit along a flow direction of the cooling liquid, and a pumping unit for pumping the cooling liquid to circulate in the cooling loop, characterized in that the pumping unit comprises at least a first pump and a second pump, wherein the first pump and the second pump are connected in parallel and driven by respective electric motors, inlets of the first pump and the second pump are connected to serve as an inlet of the pumping unit, and outlets of the first pump and the second pump are connected to serve as an outlet of the pumping unit. The present utility model also relates to an electric construction machine comprising said cooling system.

## Description

### Technical Field

The present utility model relates to the technical field of cooling systems of construction machinery, in particular to a cooling system for an electric module of an electric construction machine and an electric construction machine with said cooling system.

### Background

As new energy drives the trend of vehicle development in the future, pure electric power systems are gradually applied to mechanical construction vehicles. Compared with family cars, mechanical construction vehicles are unique in that, besides running, they also undertake a special work.

Therefore, compared with pure electric family cars, pure electric construction vehicles are often equipped with two drive motors, one for driving the vehicle to run/travel and the other for driving the working device to implement the special work. Under this circumstance, how to cool the two drive motors and the corresponding electric control systems effectively and reliably becomes a topic of the cooling systems of pure electric construction vehicles.

At present, the electric schemes of most construction machinery manufacturers are still in the stage of machine testing or concept designing, and their cooling systems are generally designed as per the following scheme: each drive motor is equipped with a separate cooling system. In other words, the two cooling systems in the scheme are independent of each other. However, this scheme has the following disadvantages: on the one hand, once the pump or pump motor in one cooling system fails, the mechanical construction vehicle will not continue the work normally or even stop; on the other hand, under some light load conditions, it is unnecessary for two pumps to run at full load at the same time, as the flow of one pump can well meet the cooling effect of two drive motors. This scheme, however, makes it impossible to turn on only one pump to cool the system of the entire vehicle.

Therefore, the present utility model is aimed to make improvement(s) of the prior art.

### Summary

To overcome the defects in the prior art, the present utility model puts forward an improved technology for the cooling system of the electrical module of electric construction machine, which enables the cooling system to provide sufficient redundancy, improves the reliability of the whole vehicle, and ensures the normal operation of the whole vehicle under the condition of power saving, and increases the cruising range of the whole vehicle.

In one aspect, the present utility model provides a cooling system for an electrical module of an electric construction machine, comprising a cooling loop in which a cooling liquid circulates, the cooling loop comprising a heat exchange unit associated with the electrical module to be temperature controlled, a heat dissipation device arranged downstream of the heat exchange unit along a flow direction of the cooling liquid, and a pumping unit for pumping the cooling liquid to circulate in the cooling loop, characterized in that the pumping unit comprises at least a first pump and a second pump, wherein the first pump and the second pump are connected in parallel and driven by respective electric motors, inlets of the first pump and the second pump are connected to serve as an inlet of the pumping unit, and outlets of the first pump and the second pump are connected to serve as an outlet of the pumping unit.

Advantageously, the electrical module comprises a drive motor module for working and a drive motor module for travelling, wherein the drive motor module for working comprises a working drive motor and/or a working drive motor controller, and the drive motor module for travelling comprises a travelling drive motor and/or a travelling drive motor controller.

Advantageously, the heat exchange unit comprises a first heat-exchanging device associated with the drive motor module for working and a second heat-exchanging device associated with the drive motor module for travelling, wherein the first heat-exchanging device is arranged in a first cooling liquid branch path and the second heat-exchanging device is arranged in a second cooling liquid branch path, and the first cooling liquid branch path and the second cooling liquid branch path are connected in parallel.

Advantageously, the first pump and the second pump are pumps with a same rated power.

Advantageously, the cooling loop further comprises a bypass line connecting the cooling liquid inlet and outlet of the heat dissipation device to bypass the heat dissipation device, wherein the bypass line is provided with a temperature control valve.

Advantageously, the cooling loop comprises a heater arranged immediately upstream of the heat exchange unit in the flow direction of the cooling liquid.

Advantageously, the cooling loop comprises a low-pressure switch to monitor whether the cooling system leaks.

Advantageously, the cooling loop comprises a pump protection bypass branch connecting the inlet and outlet of the pumping unit to bypass the pumping unit, wherein the pump protection bypass branch is provided with a one-way valve.

Advantageously, the cooling loop comprises a temperature sensor for monitoring a temperature of the cooling liquid entering the heat exchange unit; and/or a temperature sensor for monitoring a temperature of the cooling liquid is arranged immediately downstream of the heat dissipation device.

In another aspect, the present utility model provides an electric construction machine comprising an electrical module and the aforesaid cooling system.

According to the present utility model, the cooling system is designed as a cooling system with redundancy, which improves the reliability of the whole vehicle. The pumps of the two cooling systems are connected in parallel to form the power unit of the whole cooling system, in which both pumps can mutually participate in the cooling of the working drive motor and the travelling drive motor. In this way, even if one pump or pump set fails, the cooling system will still operate without stopping. And in some working conditions, one pump alone may be turned on to ensure the normal operation of the vehicle. Flexible control on turning on/off of both pumps can save power and increase the cruising range of the vehicle. In addition, through the setting of the temperature control valve, the cooling system according to the present utility model makes the cooling liquid bypass the radiator of the whole machine when the temperature of the cooling liquid is relatively low, which is beneficial to maintaining the cooling liquid in a constant optimal temperature range. Moreover, when the ambient temperature is relatively low, the cooling liquid can be heated through the setting of the heater. Thereby the operating temperature of the working drive motor/travelling drive motor can be flexibly controlled, and a higher motor efficiency can be obtained.

### Brief Description of the Drawings

Exemplary embodiments of the present utility model are described with reference to the accompanying drawings.

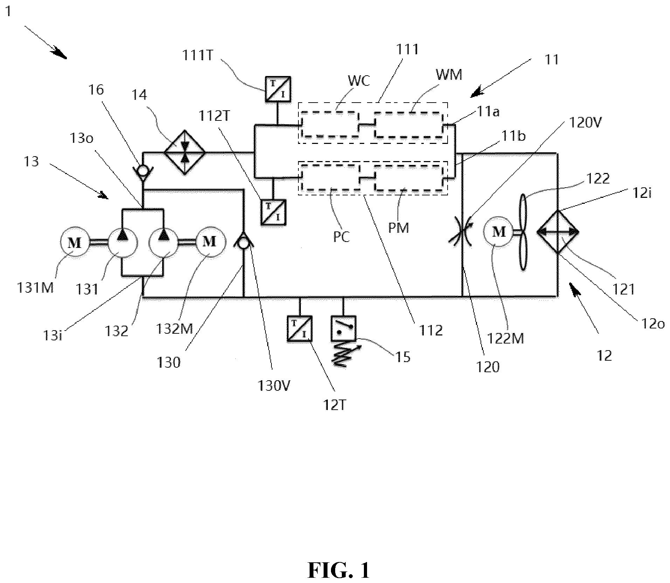

Fig. 1 is a schematic diagram of a cooling system for an electrical module of an electric construction machine according to the present utility model.

### Reference signs:

| | | |
|---|---|---|
| 1 - Cooling loop | PC - Travelling drive motor controller | 112T -Second temperature sensor |
| 11 - Heat exchange unit | | |
| 111 - First heat-exchanging device | PM - Travelling drive motor | 12 -Heat dissipation device |
| | | 121- Radiator |
| WC - Working drive motor controller | 11a - First cooling liquid branch path | 122- Fan |
| | | 122M - Fan motor |
| WM - Working drive motor | 11b - Second cooling liquid branch path | 12i - Cooling liquid inlet |
| | | 12o - Cooling liquid outlet |
| 112 - Second heat-exchanging device | 111T - First temperature sensor | 12T - Third temperature sensor |
| 120 - Bypass line | 132M - Second pump motor | 130V - One-way valve |
| 120V - Temperature control valve | 13i - Inlet | 14 - Heater |
| 13 - Pumping unit | 13o - Outlet | 15 - Low-pressure switch |
| 131 - First pump | 130- Pump protection bypass branch | 16 - Check valve |
| 132 - Second pump | 131M - First pump motor | |

The drawings are only schematic, and are not necessarily drawn to scale. In addition, they only show the parts that are necessary to clarify the present utility model, and other parts are omitted or only mentioned. That is, in addition to the components shown in the drawings, the present utility model can also include other components.

### Detailed Description of the Embodiments

The technical solution of the present utility model is described in detail below with reference to the drawings. In the following description, many specific details are described to make those skilled in the art fully understand the present utility model. However, it is obvious to those skilled in the art that the present utility model may be implemented without some of these specific details. In addition, it will be appreciated that the present utility model is not limited to the specific embodiments as introduced herein. On the contrary, any combination of the following features and elements can be considered to implement the present utility model, regardless of whether they relate to different embodiments.

Fig. 1 is a schematic diagram of the cooling system for an electrical module of an electric construction machine according to the present utility model. The cooling system comprises a cooling loop 1 in which a cooling liquid circulates. The cooling liquid is water, for example. The cooling loop 1 comprises a heat exchange unit 11 associated with an electrical module to be temperature controlled, a heat dissipation device 12 arranged downstream of the heat exchange unit 11 in the flow direction of the cooling liquid, and a pumping unit 13 for pumping the cooling liquid to circulate in the cooling loop. In the illustrated embodiment, the pumping unit 13 includes a first pump 131 and a second pump 132. The first pump 131 and the second pump 132 are connected in parallel. The first pump 131 is driven by a first pump motor 131M, and the second pump 132 is driven by a second pump motor 132M. The inlets of the first and second pumps are connected to serve as an inlet 13i of the pumping unit 13, and outlets of the first and second pumps are connected to serve as an outlet 13o of the pumping unit 13.

Although the pumping unit 13 shown in fig. 1 only includes a first pump and a second pump, it will be appreciated that the pumping unit may include more pumps, which may be connected in parallel and driven by respective electric motors. This provides a certain redundancy for the operation of the cooling system and avoids the shutdown of the whole vehicle due to the failure of one single pump.

In a preferred embodiment, the first pump 131 and the second pump 132 are pumps with the same rated power. Thus when one of the pumps fails, the other pump can replace it to ensure the normal operation of the whole cooling system. In an embodiment, the first pump and the second pump each can operate at half the power required by the cooling system, and when one of the pumps fails, the remaining normal pump runs at a power high enough to meet the pressure required for the normal operation of the whole cooling system. The first pump and the second pump can also be designed to have different rated powers, as long as their pump powers or power combination can meet the operation requirements of the whole cooling system. The first pump and the second pump are not classified into a main pump and an auxiliary pump. Therefore, the pumping unit enjoys a large range of available powers, featuring flexible system control and a variety of application scenarios.

In the illustrated embodiment, the electrical module includes a drive motor module for working and a drive motor module for travelling. The drive motor module for working may comprise a working drive motor WM and/or a working drive motor controller WC. The drive motor module for travelling may comprise a travelling drive motor PM and/or a travelling drive motor controller PC. The heat exchange unit 11 comprises a first heat-exchanging device 111 associated with the drive motor module for working and a second heat-exchanging device 112 associated with the drive motor module for travelling. The first heat-exchanging device 111 is arranged in a first cooling liquid branch path 11a, and the second heat-exchanging device 112 is arranged in a second cooling liquid branch path 11b, wherein the first cooling liquid branch path 11a and the second cooling liquid branch path 11b are connected in parallel. Thereby the cooling liquid flowing through the first heat-exchanging device 111 merges with the cooling liquid flowing through the second heat-exchanging device 112 and flows back into the cooling loop.

As shown in fig. 1, the heat dissipation device 12 includes a radiator 121 in which a cooling liquid flows and a fan 122 forcing air to flow through the radiator. The fan 122 is driven by a fan motor 122M. The cooling liquid in the radiator 121 exchanges heat with the air to lower the temperature of the cooling liquid flowing out of the radiator.

In the illustrated embodiment, the cooling loop 1 further comprises a bypass line 120 connecting the cooling liquid inlet 12i and outlet 12o of the heat dissipation device to bypass the heat dissipation device, and the bypass line 120 is provided with a temperature control valve 120V The temperature control valve 120V is configured to make the cooling liquid bypass the heat dissipation device 12 (i.e., no longer flows through the radiator of the heat dissipation device 12) and directly flow back to the pumping unit 13 when the temperature of the cooling liquid is lower than a set value. Alternatively, the temperature control valve 120V is configured to automatically adjust the flow rate of the cooling liquid entering the heat dissipation device 12 according to the temperature of the cooling liquid, and change the circulating range of the cooling liquid, so as to adjust the cooling capacity of the cooling system and ensure that the pump and the working drive motor/travelling drive motor work in a proper temperature range.

As shown in fig. 1, the cooling loop 1 further comprises a heater 14 arranged immediately upstream of the heat exchange unit 11. The heater 14 is started when the temperature of the cooling system is relatively low, and heats the cooling liquid to make it reach the working temperature required by the electrical module (including, for example, the working drive motor/travelling drive motor and the motor controllers).

After the cooling liquid flows out of the pumping unit 13, it flows through the heater 14, and then flows through the first cooling liquid branch path 11a and the second cooling liquid branch path 11b connected in parallel. Upon flowing through the two cooling liquid branch paths, the cooling liquid may be controlled by the temperature control valve 120V to flow through or bypass the heat dissipation device 12, and then flow to the pumping unit.

Therefore, by controlling the heater 14 and the temperature control valve 120V, the temperature of the cooling liquid can be maintained in the optimal range of required working temperatures, the reliability of the working drive motor/travelling drive motor and the motor controllers can be improved, and their service life can be prolonged.

As shown in fig. 1, the cooling loop 1 further comprises a pump protection bypass branch 130 that connects the inlet 13i and the outlet 13o of the pumping unit to bypass the pumping unit, and a one-way valve 130V is provided in the pump protection bypass branch 130. When the cooling loop is clogged (e.g. downstream of the pumping unit 13), the cooling liquid that flows out of the outlet of the pumping unit will accumulate. When the fluid pressure is higher than the actuation threshold of the one-way valve 130V (the actuation threshold is greater than the pressure at the outlet of the pumping unit when the pumping unit is operating), the one-way valve 130V will be opened, so that the cooling liquid can flow back to the inlet of the pumping unit via the pump protection bypass branch 130, thereby protecting the normal operation of the pumping unit.

In order that the operation of the whole cooling system can be better monitored, the cooling loop 1 is further provided with a temperature sensor for monitoring the temperature of the cooling liquid entering the heat exchange unit. In the illustrated embodiment, a first temperature sensor 111T is provided in the first cooling liquid branch path 11a upstream of the first heat-exchanging device 111 associated with the working drive motor and the working drive motor controller. A second temperature sensor 112T is provided in the second cooling liquid branch path 11b upstream of the second heat-exchanging device 112 associated with the travelling drive motor and the travelling drive motor controller. Optionally or additionally, a third temperature sensor 12T for monitoring the temperature of the cooling liquid may be provided downstream of the heat dissipation device 12. According to the temperature measurement data from these temperature sensors, the operation of the heat dissipation device or the heater and the temperature control of the electrical module can be monitored effectively.

The cooling loop 1 comprises a low-pressure switch 15 to monitor whether the cooling system leaks. In the illustrated embodiment, the low-pressure switch 15 is arranged at a position downstream of the heat dissipation device 12. When the pressure of the whole cooling system is too low due to, for example, leakage, the low-pressure switch 15 will be turned off and give an alarm to the main controller (not shown) to indicate that the cooling system is leaking.

In addition, the cooling loop 1 comprises a check valve 16 provided at the outlet 13o of the pumping unit 13 to prevent the downstream high-pressure cooling liquid flow from returning back to the pumping unit.

In the cooling system of the present utility model, through the parallel configuration of a plurality of pumps, the pumps can operate in an energy-saving manner according to the total load of the whole cooling system, which can not only save power, but also control the operating temperature of the working drive motor/travelling drive motor accurately, prolong the service life of batteries of the whole vehicle, and improve the reliability of the whole machine.

### Industrial Applicability

In order that the present utility model can be better understood, the cooling system shown in Fig. 1 is used as an example to describe the working principle of the present utility model.

In the cooling loop 1 shown in fig. 1, a pumping unit 13 (power unit), which is composed of two sets of identical pumps and pump motors connected in parallel, pumps the cooling liquid into the cooling liquid branch paths also connected in parallel and associated with the two sets of drive motors and motor controllers. The cooling liquid flows through the first heat-exchanging device 111 and the second heat-exchanging device 112 (i.e. the heat exchangers inside the two sets of drive motors and motor controllers) to implement heat-exchanging, and the heated cooling liquid gathers and flows through the heat dissipation device 12. In the heat dissipation device, the motor 122M rotates the fan 122 to drive the air with low external temperature to flow through the radiator to take away the heat in the cooling liquid. The cooling liquid flowing through the radiator 121 of the whole vehicle is cooled, and then it flows to the inlet of the pumping unit 13, and is pumped, by pump(s), to the heat exchange unit 11 associated with the electrical module. The above process is repeated back and forth to cool the two drive motors and motor controllers of the electric construction machine.

The measurement data of the temperature sensor are monitored. When the temperature of the cooling liquid system is relatively low, the heater is activated to heat the cooling liquid, so that the cooling liquid can quickly reach the working temperature required by the electrical module.

If the temperature measurement data from the third sensor 12T shows that the temperature of the cooling liquid flowing through the heat dissipation device 12 is too low, the temperature control valve 120V can be opened to make part or all of the cooling liquid flow via a bypass line to the pumping unit 13 to avoid further lowering the cooling liquid temperature.

When the system pressure is too low due to a leakage of the whole cooling loop, the low-pressure switch 15 is actuated to give an alarm.

If the cooling loop is clogged somewhere, the pump protection bypass branch 130 of the pumping unit 13 is activated to avoid damage to the pump. In addition, a check valve 16 is provided at the outlet 13o of the pumping unit 13 to prevent the downstream high-pressure liquid flow from flowing back to the pumping unit.

The cooling system according to the present utility model can be used for electric construction machinery, such as excavators, to carry out desired works and operations.

The above exemplary embodiments have presented a clear and complete description of the present utility model, and it is appreciated for those skilled in the art that various other embodiments can be envisaged in the modification of the disclosed technical solution without departing from the spirit and scope of the present utility model. All these embodiments should be understood as falling within the scope of the present utility model determined by the claims and any equivalent technical solution thereof.

## Claims

1. A cooling system for an electrical module of an electric construction machine, comprising a cooling loop in which a cooling liquid circulates, the cooling loop comprising a heat exchange unit associated with the electrical module to be temperature controlled, a heat dissipation device arranged downstream of the heat exchange unit along a flow direction of the cooling liquid, and a pumping unit for pumping the cooling liquid to circulate in the cooling loop, **characterized in that** the pumping unit comprises at least a first pump and a second pump, wherein the first pump and the second pump are connected in parallel and driven by respective electric motors, inlets of the first pump and the second pump are connected to serve as an inlet of the pumping unit, and outlets of the first pump and the second pump are connected to serve as an outlet of the pumping unit.

2. The cooling system according to claim 1, **characterized in that** the electrical module comprises a drive motor module for working and a drive motor module for travelling, wherein the drive motor module for working comprises a working drive motor and/or a working drive motor controller, and the drive motor module for travelling comprises a travelling drive motor and/or a travelling drive motor controller.

3. The cooling system according to claim 2, **characterized in that** the heat exchange unit comprises a first heat-exchanging device associated with the drive motor module for working and a second heat-exchanging device associated with the drive motor module for travelling, wherein the first heat-exchanging device is arranged in a first cooling liquid branch path and the second heat-exchanging device is arranged in a second cooling liquid branch path, and the first cooling liquid branch path and the second cooling liquid branch path are connected in parallel.

4. The cooling system according to claim 3, **characterized in that** the first pump and the second pump are pumps with a same rated power.

5. The cooling system according to claim 1, **characterized in that** the cooling loop further comprises a bypass line connecting the cooling liquid inlet and outlet of the heat dissipation device to bypass the heat dissipation device, wherein the bypass line is provided with a temperature control valve.

6. The cooling system according to claim 1, **characterized in that** the cooling loop comprises a heater arranged immediately upstream of the heat exchange unit in the flow direction of the cooling liquid.

7. The cooling system according to one of claims 1 to 6, **characterized in that** the cooling loop comprises a low-pressure switch to monitor whether the cooling system leaks.

8. The cooling system according to one of claims 1 to 6, **characterized in that** the cooling loop comprises a pump protection bypass branch connecting the inlet and outlet of the pumping unit to bypass the pumping unit, wherein the pump protection bypass branch is provided with a one-way valve.

9. The cooling system according to one of claims 1 to 6, **characterized in that** the cooling loop comprises a temperature sensor for monitoring a temperature of the cooling liquid entering the heat exchange unit; and/or a temperature sensor for monitoring a temperature of the cooling liquid is arranged immediately downstream of the heat dissipation device.

10. An electric construction machine, **characterized by** comprising an electrical module and a cooling system according to one of claims 1 to 9.
